(19) **Europäisches Patentamt European Patent Office Office européen des brevets**

(11) **EP 3 811 487 B1**

(12) **FASCICULE DE BREVET EUROPÉEN**

(45) Date de publication et mention de la délivrance du brevet:
**18.12.2024 Bulletin 2024/51**

(21) Numéro de dépôt: **19740636.6**

(22) Date de dépôt: **04.06.2019**

(51) Classification Internationale des Brevets (IPC):
*H02J 4/00* (2006.01)    *H02G 3/00* (2006.01)
*H02J 13/00* (2006.01)    *H02J 3/32* (2006.01)
*H02J 7/00* (2006.01)

(52) Classification Coopérative des Brevets (CPC):
**H02J 3/32; H02J 7/0014; H02J 7/0024; H02J 7/0048; H02J 7/005**

(86) Numéro de dépôt international:
**PCT/FR2019/051326**

(87) Numéro de publication internationale:
**WO 2019/234348 (12.12.2019 Gazette 2019/50)**

(54) **SYSTEME ÉLECTRIQUE À CELLULES COMMUTÉES ET PROCÉDÉ DE COMMANDE D'UN TEL SYSTÈME**

ELEKTRISCHES SYSTEM MIT GESCHALTETEN ZELLEN UND VERFAHREN ZUR STEUERUNG SOLCH EINES SYSTEMS

ELECTRICAL SYSTEM COMPRISING SWITCHED CELLS AND METHOD FOR CONTROLLING SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2018 FR 1800573**

(43) Date de publication de la demande:
**28.04.2021 Bulletin 2021/17**

(73) Titulaire: **Commissariat à l'Energie Atomique et aux Energies Alternatives**
**75015 Paris (FR)**

(72) Inventeurs:
• **DESPESSE, Ghislain**
  **38054 Grenoble Cedex 09 (FR)**
• **BACQUET, Sylvain**
  **38054 Grenoble Cedex 09 (FR)**
• **CASSARINO, Leandro**
  **38054 Grenoble Cedex 09 (FR)**
• **FERNANDEZ, Eric**
  **38054 Grenoble Cedex 09 (FR)**
• **LOPEZ, Yan**
  **38054 Grenoble Cedex 09 (FR)**
• **THOMAS, Remy**
  **38054 Grenoble Cedex 09 (FR)**

(74) Mandataire: **Cabinet Beaumont**
**4, Place Robert Schuman**
**B.P. 1529**
**38025 Grenoble Cedex 1 (FR)**

(56) Documents cités:
| | |
|---|---|
| EP-A1- 2 993 483 | GB-A- 2 537 616 |
| US-A- 5 656 915 | US-A1- 2012 091 967 |
| US-A1- 2013 009 485 | US-A1- 2013 278 216 |
| US-A1- 2014 077 595 | |

EP 3 811 487 B1

## Description

Domaine

La présente invention concerne un système à cellules commutées et un procédé de commande d'un tel système.

Exposé de l'art antérieur

Un système à cellules commutées comprend plusieurs étages ou modules dans chacun desquels des cellules peuvent être connectées en série et/ou en parallèle par des interrupteurs commandables. Un exemple de système à cellules commutées correspond à une batterie d'accumulateurs électriques, également appelée pack batterie. Des exemples de batteries à accumulateurs électriques commutés sont décrits notamment dans les documents US2014015488, US2014287278, FR2972308, FR2972307, US2014109950, et US5656915.

Un système à cellules commutées est adapté à fournir une tension dont la forme d'onde peut varier dans le temps en faisant varier au cours du temps la connexion des cellules via la fermeture ou l'ouverture des interrupteurs.

Il est souhaitable que la sélection des cellules à connecter/déconnecter soit réalisée en assurant que chaque cellule fonctionne dans sa plage de fonctionnement optimale en fonction par exemple de mesures de tensions, de courants et/ou de température. En particulier, il peut être souhaitable de réaliser un équilibrage des cellules, c'est-à-dire de sélectionner les cellules à connecter/déconnecter de façon que toutes les cellules arrivent en fin de charge ou en fin de décharge sensiblement en même temps.

Pour effectuer la fonction d'équilibrage, il est généralement déterminé un classement des cellules selon des niveaux de priorité, appelé table de priorités par la suite, les cellules les plus prioritaires du classement étant celles qui devraient être sélectionnées les premières, les cellules étant de moins en moins prioritaires lorsque le niveau de priorité dans le classement augmente. Le classement de priorités est susceptible d'évoluer au cours du fonctionnement du système, notamment suite à l'évolution des états de charge des cellules. Deux tables de priorité peuvent être utilisées, la première table, appelée table de priorités de décharge par la suite, étant utilisée lors d'une opération de décharge des cellules et la deuxième table, appelée table de priorités de charge par la suite, étant utilisée lors d'une opération de charge des cellules. A titre d'exemple, lors d'une opération de décharge, les cellules les plus prioritaires sont celles qui sont les plus chargées et les cellules les moins prioritaires sont celles qui sont les moins chargées et, lors d'une opération de charge, les cellules les plus prioritaires sont celles qui sont les moins chargées et les cellules les moins prioritaires sont celles qui sont les plus chargées.

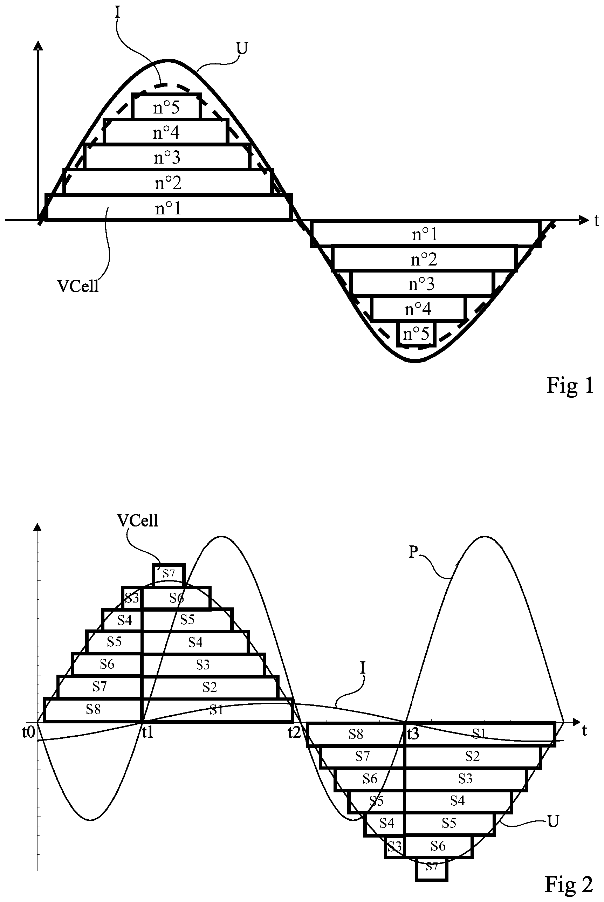

La figure 1 représente un exemple de courbe d'évolution d'une tension U et d'un courant I périodiques ou pseudo-périodiques à fournir par un système à cellules commutées comprenant par exemple cinq cellules susceptibles d'être connectées en série. La tension U à fournir est sinusoïdale et le courant I à fournir est en phase avec la tension U. La puissance instantanée échangée par le système est égale au produit de la tension U et du courant I. A titre d'exemple, une puissance instantanée positive signifie la fourniture d'une puissance électrique par le système vers l'extérieur et une puissance instantanée négative signifie l'absorption par le système d'une puissance électrique provenant de l'extérieur. Les cellules sont connectées et déconnectées au fur et à mesure de l'évolution de la tension U pour que la tension fournie par le système suive la tension U. Dans l'exemple représenté en figure 1, la puissance électrique est toujours positive.

En figure 1, on a représenté de façon schématique par des rectangles VCell les tensions fournies par chaque cellule connectée, chaque rectangle contenant le numéro de priorité de la cellule connectée, la cellule la plus prioritaire ayant le numéro 1 et la cellule la moins prioritaire ayant le numéro 5. La tension réellement fournie par le système correspond à la somme des tensions élémentaires des cellules connectées. La sélection des cellules à connecter peut consister à utiliser la table de priorités de charge lorsque le système est en charge ou la table de priorités de décharge lorsque le système est en décharge et à connecter les cellules selon les niveaux de priorité croissants du classement utilisé.

Dans l'exemple de la figure 1, la puissance instantanée a le même signe sur une période de la tension U. Toutefois, pour certaines applications, le système peut alimenter une charge ayant une composante réactive de sorte que la puissance instantanée fournie par le système peut changer plusieurs fois de signe sur la période de la consigne de tension U.

La figure 2 est une figure analogue à la figure 1 pour un système comprenant 8 cellules susceptibles d'être connectées en série et dans le cas où le courant I est déphasé par rapport à la tension U. On a en outre représenté en figure 2 la courbe d'évolution P de la puissance instantanée échangée par le système. La puissance P change quatre fois de signe sur la période de la tension U aux instants t0, t1, t2 et t3. En figure 2, on a représenté de façon schématique par des rectangles VCell les tensions fournies par chaque cellule connectée, chaque rectangle contenant une référence de l'état de charge de la cellule, la cellule la plus chargée ayant la référence S1 et la cellule la moins chargée ayant la référence S8. De l'instant t0 à l'instant t1, la puissance instantanée est négative de sorte que le système est en charge. La sélection des cellules à connecter est réalisée en utilisant la table de priorités de charge. Ainsi, la cellule la moins chargée ayant la référence S8 est chargée en premier. A l'instant t1, le signe de la puissance instantanée change alors que la tension n'est pas nulle. Le système passe alors d'une opération de charge à une opération de décharge. Si on souhaite utiliser alors la table de priorités de décharge, comme cela est représenté en figure 2, le nombre de cellules à déconnecter et à connecter est important. Toutefois, il peut être difficile pour le système d'effectuer rapidement un nombre important de connexions et déconnexions. Il peut alors ne pas être possible de suivre convenablement la tension U. Toutefois, si on continue à utiliser la table de priorités de charge après l'instant t1, certaines cellules connectées qui ont subi une phase de charge entre t0 et t1, peuvent ne pas être prioritaires pour une opération de décharge, telle que la cellule S8. Le risque est alors que des cellules soient trop déchargées, car la phase de décharge entre t1 et t2 est plus longue que la phase de charge, entre t0 et t1, comme cela pourrait être le cas pour la cellule S8 si la table de priorités de charge continue à être utilisée après l'instant t1. En alternative, comme la puissance moyenne est positive, c'est-à-dire que le système est globalement en décharge, il serait plutôt avantageux d'utiliser en continu la table de priorité en décharge. Toutefois, le courant moyen subi par chaque cellule ne suivrait pas pour autant forcément l'ordre décroissant du tableau de priorité à la décharge, par exemple, S1 pourrait voir un courant de décharge inférieur à S7, S7 étant utilisé uniquement en puissance positive alors que S1 subit une alternance de puissance négative et positive avec une durée de connexion effectivement plus longue mais avec un courant moyen pas forcément plus élevé pour autant.

Résumé

Ainsi, un objet d'un mode de réalisation est de prévoir une batterie qui pallie au moins certains des inconvénients des systèmes à cellules commutées décrits précédemment.

Un autre objet est que l'équilibrage des cellules soit facilité.

Un autre objet est que la sélection des cellules à connecter tienne compte des changements de signes de la puissance instantanée fournie par le système.

Un autre objet est que le nombre de cellules connectées simultanément soit réduit, de préférence égale à l'unité.

Ainsi, un mode de réalisation prévoit un procédé selon la revendication 1 de commande d'un système électrique comprenant des première et deuxième bornes, des cellules électriques et des interrupteurs configurés pour connecter ou déconnecter les cellules en série et/ou en parallèle entre les première et deuxième bornes.

Un mode de réalisation prévoit également un système électrique, selon la revendication 10, comprenant des première et deuxième bornes, des cellules électriques, des interrupteurs configurés pour connecter ou déconnecter les cellules en série et/ou en parallèle entre les première et deuxième bornes et un module de traitement.

Selon un mode de réalisation, les cellules sont des éléments de stockage de charges électriques.

Selon un mode de réalisation, les cellules sont des accumulateurs électriques.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un exemple de courbes d'évolution d'une tension et d'un courant à fournir par un système connu et les cellules qui sont connectées pour suivre la consigne de tension ;

la figure 2 est une figure analogue à la figure 1 pour un autre exemple de courbes d'évolution de la tension et du courant à fournir par le système connu et représente en outre la courbe d'évolution de la puissance instantanée à fournir par le système à cellules commutées ;

la figure 3 représente, de façon partielle et schématique, un mode de réalisation d'une batterie à accumulateurs commutés ;

la figure 4 représente, de façon partielle et schématique, un mode de réalisation d'un module de la batterie de la figure 2 ;

la figure 5 est un schéma par blocs illustrant un mode de réalisation d'un procédé de commande d'un système à cellules commutées ;

les figures 6 à 9 représentent différents exemples de courbes d'évolution de la tension, de l'intensité du courant et de la puissance instantanée à fournir par la batterie représentée en figure 3 et les répartitions des courants moyens fournis par les cellules de la batterie en fonction du numéro de mise en oeuvre de la cellule ;

la figure 10 est une figure analogue à la figure 1 pour une autre règle de connexion des cellules ; et

les figures 11 à 13 représentent différents exemples de courbes d'évolution de la tension, de l'intensité du courant et de la puissance instantanée à fournir par la batterie représentée en figure 2 et les répartitions des courants moyens fournis par les cellules de la batterie en fonction du numéro de mise en oeuvre de la cellule pour deux règles différentes de connexion des cellules.

Description détaillée

De mêmes éléments ont été désignés par de mêmes références dans les différentes figures. Par souci de clarté, seuls les éléments utiles à la compréhension des modes de réalisation décrits ont été représentés et sont détaillés. Dans la suite de la description, les expressions "sensiblement" et "de l'ordre de" signifient "à 10 % près", de préférence "à 5 % près".

Un mode de réalisation d'un procédé de commande d'un système à cellules commutées va être décrit dans le cas d'une batterie à accumulateurs commutés pour laquelle les cellules correspondent à des accumulateurs commutés. Toutefois, les présents modes de réalisation s'appliquent à tout type de système à cellules commutés adapté à fournir une tension variable à une charge. Chaque cellule du système à cellules commutées peut correspondre à un élément de stockage de charges électriques. Un exemple d'élément de stockage de charges électriques est par exemple un accumulateur électrique ou un condensateur. En fonctionnement, le système est destiné à être relié à un dispositif qui absorbe ou fournit de la puissance selon l'application envisagée. A titre d'exemple, ce dispositif correspond à une machine électrique, par exemple à un moteur électrique, ou au réseau de distribution électrique.

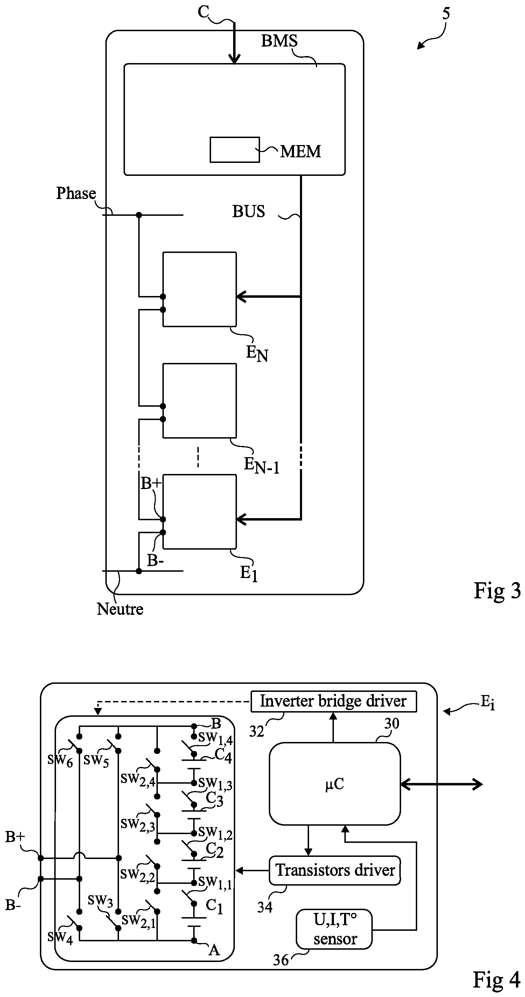

La figure 3 représente un exemple d'une batterie 5 à accumulateurs commutés. La batterie 5 comprend N modules $E_1$ à $E_N$. Le nombre N est un nombre entier supérieur ou égal à 1, de préférence le nombre N est compris entre 1 et 100000. Chaque module comprend une borne positive B+ et une borne négative B- et plusieurs cellules, non représentées, pouvant être connectées entre elles en série et/ou en parallèle par l'intermédiaire d'interrupteurs, non représentés, entre les bornes B+ et B-. Les modules $E_1$ à $E_N$ peuvent être connectés en série entre une première borne N de la batterie 5 et une deuxième borne P de la batterie 5.

La batterie 5 comprend un circuit BMS de commande des modules $E_1$ à $E_N$, appelé circuit de commande maître par la suite. Le circuit de commande maître BMS peut échanger des données avec chaque module $E_1$ à $E_N$ par l'intermédiaire d'un bus bidirectionnel BUS de transmission de données. Chaque module $E_1$ à $E_N$ comprend un circuit adapté à commander les interrupteurs du module à partir des commandes fournies par le circuit de commande maître BMS. Ce circuit de commande est appelé circuit de commande esclave par la suite. Chaque module peut comprendre, en outre, des capteurs, non représentés, par exemple des capteurs de la tension aux bornes de chaque cellule du module, des capteurs du courant fourni par chaque cellule du module et/ou des capteurs de la température de chaque cellule du module. Le circuit de commande esclave de chaque module $E_1$ à $E_N$ est adapté à transmettre au circuit de commande maître BMS des données représentatives des mesures de tensions, de courants et/ou de températures par le bus de transmission de données BUS.

Le circuit de commande maître BMS peut comprendre un capteur de la tension entre les bornes P et N ainsi qu'un capteur de courant global et un ou plusieurs capteurs de température. Le circuit de commande maître BMS est adapté à recevoir une consigne C et à sélectionner les cellules à connecter ou à déconnecter pour chaque module de façon à suivre la consigne. La consigne C peut être une consigne de tension ou de courant, les cellules à connecter ou à déconnecter pour chaque module étant alors sélectionnées pour obtenir la tension et/ou le courant souhaités entre les bornes P et N de la batterie 5. A titre de variante, la consigne C peut être une consigne d'un nombre d'accumulateurs à connecter en série et/ou en parallèle entre les bornes P et N de la batterie 5, les cellules à connecter ou à déconnecter pour chaque module étant alors sélectionnées pour obtenir le nombre d'accumulateurs connectées en série et/ou en parallèle entre les bornes P et N de la batterie 5 demandé par la consigne. Le circuit de commande maître BMS fournit alors des commandes aux modules par l'intermédiaire du bus de transmission de données BUS à partir desquelles le circuit de commande esclave de chaque module connecte ou déconnecte les cellules selon la configuration souhaitée.

Le circuit de commande maître BMS peut correspondre à un circuit dédié et/ou peut comprendre un processeur, par exemple un microprocesseur ou un microcontrôleur, adapté à exécuter des instructions d'un programme d'ordinateur stocké dans une mémoire. Le circuit de commande maître BMS comprend notamment une mémoire MEM de stockage de données.

La figure 4 représente un mode de réalisation du module $E_i$, où i varie de 1 à N.

Selon le présent mode de réalisation, le module $E_i$ est adapté à fournir une tension $U_i$ entre la borne positive B+ et la borne négative B-. Le module $E_i$ comprend des cellules $C_1$ à $C_M$ où M est un nombre entier supérieur ou égal à 2. Par exemple M est compris entre 2 et 15, de préférence entre 2 et 5, quatre cellules $C_1$, $C_2$, $C_3$ et $C_4$ étant représentées à titre d'exemple en figure 3. Les cellules $C_1$ à $C_M$ sont reliées entre elles et aux bornes B+ et B- par des interrupteurs. Dans le présent mode de réalisation, pour chaque cellule $C_k$, k étant un nombre entier variant de 1 à M, le module $E_i$ comprend un premier interrupteur $SW_{1,k}$ en série avec la cellule $C_k$ et un deuxième interrupteur $SW_{2,k}$ en parallèle de l'ensemble comprenant la cellule $C_k$ et l'interrupteur $SW_{1,k}$. Ainsi, chaque cellule est associée à un interrupteur en série et présente un interrupteur disposé en parallèle. Les M ensembles comprenant la cellule $C_k$ et le premier interrupteur $SW_{1,k}$ sont disposés en série entre un noeud A et un noeud B. La commande des interrupteurs $SW_{1,k}$ et $SW_{2,k}$, k variant de 1 à M, permet de mettre en série entre les noeuds A et B, 1 à M cellules parmi les M cellules $C_1$ à $C_M$. Dans le présent mode de réalisation, le module $E_i$ comprend en outre un pont inverseur, également appelé pont en H, entre les noeuds A et B et les bornes B+ et B- qui permet d'appliquer la tension présente entre les noeuds A et B entre les bornes B+ et B- dans les deux sens. Selon un mode de réalisation, le pont inverseur comprend un interrupteur $SW_3$ reliant le noeud A à la borne B+, un interrupteur $SW_4$ reliant le noeud A à la borne B-, un interrupteur $SW_5$ reliant le noeud B à la borne B+ et un interrupteur $SW_6$ reliant le noeud B à la borne B-. A titre d'exemple chaque interrupteur $SW_{1,k}$ et $SW_{2,k}$, k variant de 1 à M, $SW_3$, $SW_4$, $SW_5$ et $SW_6$ peut correspondre à transistor à effet de champ à grille isolée, également appelé transistor MOS, notamment un transistor MOS de puissance, par exemple un transistor MOS à canal N.

Chaque module $E_i$ comprend, en outre, le circuit de commande esclave 30 ($\mu$C) adapté à échanger des données émises par le circuit de commande maître BMS sur le bus de transmission de données BUS. Le circuit de commande esclave 30 peut correspondre à un circuit dédié ou peut comprendre un processeur, par exemple un microprocesseur ou un microcontrôleur, adapté à exécuter des instructions d'un programme d'ordinateur stocké dans une mémoire.

Chaque module $E_i$ comprend, en outre, un circuit de pilotage 32 (Inverter bridge driver) relié aux interrupteurs $SW_3$, $SW_4$, $SW_5$ et $SW_6$ du pont inverseur et un circuit de pilotage 34 (Transistors driver) relié aux interrupteurs $SW_{1,k}$ et $SW_{2,k}$, k variant de 1 à M. Chaque circuit de pilotage 32, 34 est adapté à convertir les signaux de commande fournis par le circuit de commande esclave 30 en signaux adaptés à la commande des interrupteurs.

Chaque module $E_i$ comprend, en outre, des capteurs 36 (U, I, T° sensor) reliés au circuit de commande esclave 30. Le module $E_i$ peut comprendre, pour chaque cellule $C_k$, un capteur de température adapté à mesurer la température de la cellule $C_k$. Le module $E_i$ peut en outre comprendre, pour chaque cellule $C_k$, un capteur de tension adapté à mesurer la tension aux bornes de la cellule $C_k$. Le module $E_i$ peut en outre comprendre un capteur de courant adapté à mesurer le courant circulant au noeud A ou au noeud B. Le circuit de commande esclave 30 de chaque module $E_i$ est adapté à transmettre des troisièmes données au circuit de commande maître BMS sur le bus de transmission de données BUS représentatives des mesures réalisées par les capteurs 36 du module $E_i$. Le nombre et le type de capteurs dépend notamment de l'agencement des cellules du module $E_i$. Dans l'agencement de cellules représenté en figure 3, un seul capteur du courant circulant au noeud A ou au noeud B peut être prévu, ou pas de capteur de courant du tout, la mesure de courant pouvant aussi s'effectuer sur un point quelconque du chemin de puissance, par exemple via un circuit dédié sur le circuit de commande maître BMS.

Dans le mode de réalisation de module $E_i$ de batterie illustré en figure 4, un ordre de connexion de la cellule $C_k$ du module $E_i$ signifie que la cellule $C_k$ doit être connectée en série entre les noeuds A et B du module $E_i$, ce qui est obtenu en fermant l'interrupteur $SW_{1,k}$ et en ouvrant l'interrupteur $SW_{2,k}$, un ordre de déconnexion de la cellule $C_k$ du module $E_i$ signifie que la cellule $C_k$ ne doit pas être connectée en série entre les noeuds A et B du module $E_i$, ce qui est obtenu en ouvrant l'interrupteur $SW_{1,k}$ et en fermant l'interrupteur $SW_{2,k}$. Toutefois, pour un agencement différent des cellules $C_k$ du module $E_i$ dans lequel les cellules $C_k$ peuvent être agencées en série et/ou en parallèle entre elles entre les noeuds A et B, un ordre de connexion d'une cellule $C_k$ précise en outre dans quelle configuration, série ou parallèle, la cellule $C_k$ se trouve par rapport aux autres cellules du module $E_i$.

L'ordre de déconnexion des cellules déjà connectées peut être réalisé de façon automatique en suivant une règle de déconnexion. Un exemple de règle de déconnexion est que la dernière cellule connectée est la première à être déconnectée, cette règle étant appelée règle FILO par la suite (sigle anglais pour First In Last Out) . Toutefois, une autre règle de déconnexion peut être utilisée. A titre d'exemple, la règle de connexion peut être que la première cellule connectée est la première à être déconnectée, cette règle étant appelée règle FIFO par la suite (sigle anglais pour First In First Out).

Selon un mode de réalisation, la tension et le courant à fournir par le système à cellules commutées sont continus, périodiques ou sensiblement périodiques, ce qui conduit à fournir une puissance continue, périodique, ou sensiblement périodique. Ceci signifie que l'on peut définir une période T pour la tension et le courant pour laquelle les courbes d'évolution du courant et de la tension varient peu d'une période à la suivante. A titre d'exemple, on peut mesurer l'évolution d'une période à l'autre des courbes de tension/courant avec l'erreur quadratique moyenne, calculée sur une période. On peut définir qu'une tension/un courant évolue 'peu' d'une période à l'autre si l'erreur quadratique moyenne, entre une période et la suivante, est inférieure à 20 %. L'erreur quadratique moyenne (MSE, sigle anglais pour Mean Squared Error) étant calculée, par exemple pour la courbe de tension U, entre la période $T_0$ et la période suivante $T_1$, selon la relation 1) suivante :

$$MSE(U_{T1\text{-}T0}) = \frac{1}{n}\sum_{i=1}^{n}\left(U_{T1_i}\text{-}U_{T0_i}\right)^2 \qquad\qquad 1)$$

Dans certains cas cette faible variation peut simplement se traduire par une séquence de durées entre les passages à zéro de la tension ou du courant qui ne change pas de plus de 20 % d'une période à l'autre et de même pour l'amplitude crête atteinte entre chaque passage à zéro (ou la valeur efficace).

Il faut noter que ce critère peut exceptionnellement ne pas être respecté, mais qu'il est de préférence respecté en moyenne au moins 8 fois sur 10 dans l'enchaînement des périodes. On peut par exemple avoir des variations imprévisibles et brutales de courant à la connexion/déconnexion d'une charge, la présence de perturbations non périodiques lorsque la batterie est connectée au réseau électrique, ou encore des variations rapide de fréquence et d'amplitude, par exemple en phase de freinage intense d'un véhicule électrique. Selon un mode de réalisation, la période T est comprise entre 1 ms et 1 s, ce qui correspond à une fréquence comprise entre 1 Hz et 1000 Hz. A titre d'exemple, lorsque le système à cellules commutées est utilisé pour la commande d'un moteur électrique, la tension et le courant à fournir par le système peuvent être sensiblement sinusoïdaux avec une période T de l'ordre de quelques millisecondes à quelques centaines de millisecondes, les phases d'accélération/décélération du moteur pouvant être de l'ordre de quelques secondes, ce qui fait peu varier les courbes de tension et courant entre une période et la suivante. En effet, pour une batterie 5 alimentant un moteur électrique, en fonction de la vitesse moteur, la fréquence électrique appliqué au moteur peut aller de quelques hertz jusqu'à plus d'un kilohertz. La fenêtre temporelle d'analyse peut par exemple être choisie de 100 ms à 1 s de façon à couvrir au moins une période électrique complète en basse vitesse et plusieurs périodes électriques quand la vitesse est plus élevée.

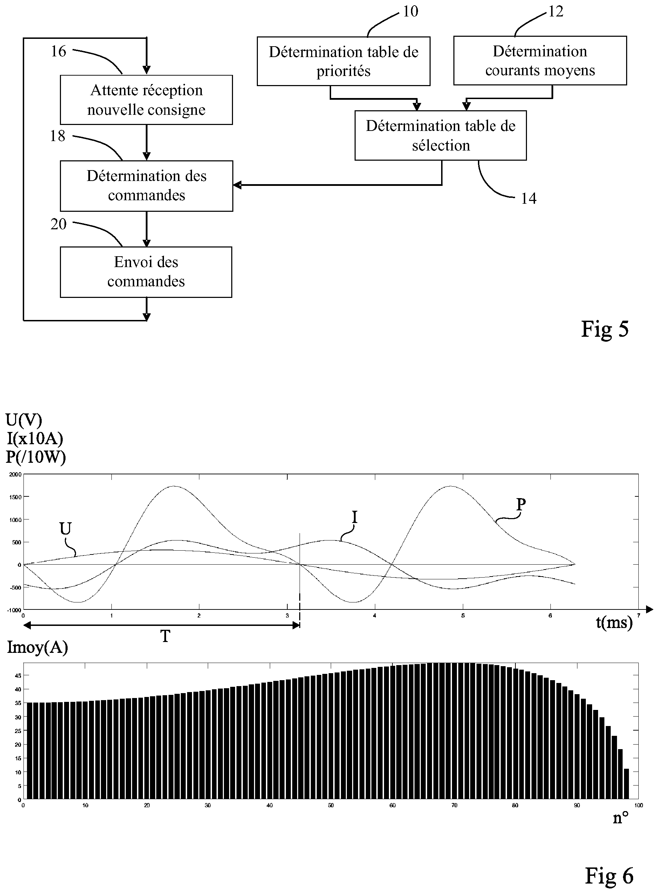

La figure 5 est un schéma-bloc illustrant un procédé de connexion/déconnexion des cellules pouvant être mis en oeuvre par un système à cellules commutées, par exemple la batterie 5 représentée en figure 3. Le procédé peut alors être mis en oeuvre par le circuit de commande maître BMS de la batterie 5.

A l'étape 10, les tables de priorités sont mises à jour. Selon un mode de réalisation, deux tables de priorités sont utilisées, la table de priorités de charge et la table de priorités de décharge. A titre d'exemple, pour la batterie 5, chaque table de priorités peut être stockée dans la mémoire MEM du circuit de commande maître BMS par exemple sous la forme d'un tableau, chaque ligne du tableau correspondant par exemple à une ligne de la mémoire MEM. A titre d'exemple, pour un système comprenant N cellules, pour chaque table de priorité, on attribue à chaque cellule un identifiant, par exemple un numéro qui varie de 1 à N. Les identifiants associés à la même cellule peuvent être les mêmes pour les deux tables de priorités. Pour un système comprenant N cellules, chaque table de priorités comprend N lignes, chaque ligne j, j étant un nombre entier variant de 1 à N, étant associée à la cellule de numéro j. Le circuit de commande maître BMS est notamment adapté à stocker dans chaque table de priorités pour chaque cellule le niveau de priorité de la cellule. A titre d'exemple, pour un système comprenant N cellules, les niveaux de priorité des cellules vont de 1 à N, le niveau de priorité "1" étant le plus important et le niveau de priorité "N" étant le moins important. Les niveaux de priorité des cellules de chaque table de priorités peuvent être modifiés, notamment à partir de mesures issues de capteurs. On appelle mise à jour de la table de priorités une modification des niveaux de priorité d'au moins certaines cellules dans la table de priorités.

Les niveaux de priorités lors d'une opération de charge ne sont pas nécessairement les symétriques des niveaux de priorité lors d'une opération de décharge, c'est-à-dire que l'ordre des niveaux de priorité des cellules, du plus prioritaire ou moins prioritaire, pour une opération de décharge du système n'est pas nécessairement l'inverse de l'ordre des niveaux de priorité des cellules, du plus prioritaire ou moins prioritaire, pour une opération de charge.

Pour la détermination du niveau de priorité de chaque cellule du système dans la table de priorités de charge ou dans la table de priorités de décharge, il peut être pris en compte un ou plusieurs critères parmi les critères suivants, pour chaque cellule :

- l'état de charge de la cellule ;
- la température de la cellule ;
- la capacité de la cellule ;
- l'état de santé de la cellule (SoH, sigle anglais pour State of Health) ;
- l'impédance interne de la cellule ;
- le courant qui traverse la batterie 5, par exemple le courant efficace ;
- le type de cellule notamment dans le cas où les cellules du système ne sont pas toutes du même type avec, par exemple, des premières cellules dont l'utilisation est à privilégier à haute température et des deuxièmes cellules dont l'utilisation est à privilégier à basse température, ou encore des premières cellules dont l'utilisation est à privilégier à faible courant et des deuxièmes cellules dont l'utilisation est à privilégier à fort courant ; et
- un niveau d'urgence, notamment pour des besoins de diagnostic, par exemple de façon à accélérer la charge ou la décharge d'une cellule particulière pour estimer son état de santé (SoH) ou au contraire maintenir une cellule isolée pour estimer sa tension à vide après un temps de relaxation.

A l'étape 12, il est déterminé pour chaque numéro de mise en oeuvre une donnée représentative de la charge électrique, du courant moyen ou de l'énergie échangée par la cellule correspondant à ce numéro de mise en oeuvre, sur une fenêtre temporelle d'analyse en fonction du numéro de mise en oeuvre de la cellule. En cas de première utilisation, les valeurs de courant moyen ou d'énergie seront à zéro. La fenêtre temporelle d'analyse est définie à partir de la période T de la consigne C à suivre et est, par exemple, égale à la période T, à la moitié de la période T ou à plusieurs périodes T. La période électrique T peut être variable, par exemple dans le cas du pilotage d'un moteur à vitesse variable. Dans ce cas, la période T va évoluer dans le temps. Il est alors possible de se baser sur une durée de période moyenne/nominale, ou sur une durée mesurée sur la/les périodes précédentes, ou de choisir une fenêtre de durée fixe déterminée à l'avance. Selon un mode de réalisation, il est utilisé la période, ou plusieurs périodes, immédiatement précédente au moment de l'analyse.

Le numéro de mise en oeuvre correspond au rang de la cellule dans la succession de connexions des cellules. Une cellule ayant un numéro de mise en oeuvre n signifie que la cellule est la n$^{ième}$ cellule qui est connectée. Lorsque la règle de déconnexion est la règle FILO, cela signifie en outre que la cellule est la n$^{ième}$ en partant de la dernière à être déconnectée.

Le courant moyen peut être déterminé en calculant la moyenne du courant échangé par la cellule, correspondant au numéro de mise en oeuvre n pour lequel on veut calculer le courant, sur la fenêtre d'analyse. La charge électrique échangée par une cellule, correspondant au numéro de mise en oeuvre n pour lequel on veut calculer le courant, sur la fenêtre d'analyse peut être déterminée en calculant l'intégrale du courant échangé par la cellule sur la fenêtre d'analyse. L'énergie échangée correspond au produit de la charge électrique échangée sur la fenêtre d'analyse par la tension aux bornes de la cellule. Le courant moyen fourni par une cellule peut être déterminé à partir de mesures de courant provenant d'un capteur de courant. A titre de variante, le courant moyen d'une cellule peut être déterminé par simulation à partir de l'évolution du courant total fourni par le système sur la fenêtre d'analyse et des instants estimés de connexion et de déconnexion de la cellule sur la fenêtre d'analyse. Dans la suite de la description, on utilise le courant moyen fourni par la cellule de mise en oeuvre n sur la fenêtre d'analyse. Toutefois, il est clair que les modes de réalisation décrits par la suite s'appliquent également dans le cas où il est utilisé une autre donnée représentative de la charge électrique, du courant moyen ou de l'énergie échangée par la cellule sur la fenêtre d'analyse.

Il est en outre déterminé si la puissance moyenne de sortie du système est une puissance positive ou négative sur la fenêtre d'analyse, c'est-à-dire si le système est globalement en décharge ou en charge sur la fenêtre d'analyse. Il est alors déterminé un classement des numéros de mise en oeuvre des cellules en fonction des courants moyens des cellules associées à ces numéros de mise en oeuvre n. Lorsque le système est globalement en décharge sur la fenêtre d'analyse, les numéros de mise en oeuvre des cellules peuvent être classés en fonction des courants moyens décroissants en incluant les numéros de mise en oeuvre des cellules pour lesquelles le courant moyen est nul. Lorsque le système est globalement en charge sur la fenêtre d'analyse, les numéros de mise en oeuvre des cellules peuvent être classés en fonction des courants moyens croissants en incluant les numéros de mise en oeuvre des cellules pour lesquelles le courant moyen est nul sur la fenêtre d'analyse.

A l'étape 14, il est déterminé une table de sélection à partir de la table de priorités et du classement des numéros de mise en oeuvre des cellules. La table de sélection indique quelle est la prochaine cellule à mettre en oeuvre, c'est-à-dire à connecter. La table de sélection peut comprendre, pour chaque cellule, le numéro de mise en oeuvre de la cellule et l'identifiant de la cellule. A titre d'exemple, pour une batterie comprenant N cellules, les ordres de mise en oeuvre des cellules vont de 1 à N, le numéro 1 de mise en oeuvre signifie que la cellule associée sera la première à être connectée et le numéro N de mise en oeuvre signifie que la cellule associée sera la dernière à être connectée.

Selon un mode de réalisation, les numéros de mise en oeuvre sont attribués aux cellules en tenant compte des tables de priorités et du classement des numéros de mise en oeuvre des cellules en fonction des courants moyens des cellules. Selon un mode de réalisation, il est utilisé la table de priorités de charge si le système est globalement en charge et la table de priorités de décharge si le système est globalement en décharge et les numéros de mise en oeuvre du classement des numéros de mise en oeuvre des cellules, classés à l'étape 12, sont attribués aux cellules classées selon des niveaux de priorité croissants. Ceci signifie qu'il est attribué à la cellule ayant le i$^{ème}$ niveau de priorité de la table de priorités le numéro de mise en oeuvre se trouvant à la i$^{ème}$ position dans le classement des numéros de mise en oeuvre. Par exemple, il est attribué à la cellule ayant le niveau de priorité le plus élevé dans la table de priorités le numéro de mise en oeuvre se trouvant à la première position dans le classement des numéros de mise en oeuvre. De même, il est attribué à la cellule ayant le deuxième niveau de priorité le plus élevé dans la table de priorités le numéro de mise en oeuvre qui est à la deuxième position dans le classement des numéros de mise en oeuvre, et ainsi de suite.

Pour certaines formes d'onde de courant et tension, des premières cellules peuvent échanger une énergie moyenne positive sur une période d'évolution T de la tension et du courant fournis par le système tandis que des deuxièmes cellules peuvent échanger une énergie moyenne négative sur la période T. Ceci signifie que, sur la période T, les premières cellules sont globalement en décharge tandis que les deuxièmes cellules sont globalement en charge. Dans le mode de réalisation décrit précédemment, si le système est globalement en charge, la table de priorités de charge est utilisée pour toutes les cellules pour la détermination de la table de sélection, c'est-à-dire à la fois pour les cellules qui sont en charge sur la période T mais également pour les cellules qui sont en décharge sur la période T. Si le système est globalement en décharge, la table de priorités de décharge est utilisée pour toutes les cellules, c'est-à-dire à la fois pour les cellules qui sont en décharge sur la période T mais également pour les cellules qui sont en charge sur la période T.

Selon un autre mode de réalisation, pour la détermination de la table de sélection, il est utilisé la table de priorités de charge pour les cellules qui sont globalement en charge sur la période T et la table de priorités de décharge pour les cellules qui sont globalement en décharge sur la période T. Ceci permet d'éviter le risque de surcharger certaines cellules alors que la puissance moyenne fournie par le système est positive, ce qui correspond à une décharge du système, et inversement le risque de trop décharger certaines cellules alors que le système est globalement en train de se recharger.

Toutefois, des cellules peuvent à la fois être prioritaires en charge et en décharge et donc susceptibles d'apparaître deux fois dans la table de sélection lorsque des premières cellules sont globalement en décharge et des deuxièmes cellules sont globalement en charge sur la période T. Pour éviter un tel conflit, il peut alors être mis en oeuvre l'une des possibilités suivantes :

- attribuer d'abord les numéros de mise en oeuvre aux cellules ayant un courant moyen d'un premier signe, par exemple les cellules qui participent au mode principal de charge ou de décharge du système, puis attribuer les numéros de mise en oeuvre restant aux cellules restantes ;
- en cas de conflit, alterner les attributions entre les numéros de mise en oeuvre correspondant à des courants positif et négatif ; ou
- en cas de conflit, affecter aléatoirement les numéros de mise en oeuvre correspondant à des courants positif et négatif.

A l'étape 16, le système détermine si une nouvelle consigne C a été reçue. Si une nouvelle consigne C a été reçue, le procédé se poursuit à l'étape 18.

A l'étape 18, le système détermine des commandes pour suivre la nouvelle consigne en utilisant la table de sélection. Le procédé se poursuit à l'étape 20.

A l'étape 20, les cellules sont connectées/déconnectées en fonction des commandes. Le procédé se poursuit à l'étape 16.

Les étapes 10 et 12 peuvent être réalisées indépendamment l'une de l'autre et indépendamment des étapes 16 à 20. A titre d'exemple, les étapes 10 et 12 peuvent être réalisées de façon répétée, par exemple toutes les 100 ms, idéalement une à quelques fois la fenêtre d'analyse, ou une à quelques fois la période électrique T. Une nouvelle table de sélection peut être déterminée à l'étape 14 chaque fois qu'une mise à jour de la table de priorités de charge ou de décharge est réalisée à l'étape 10 et à chaque fois qu'un nouveau classement des numéros de mise en oeuvre est déterminé à l'étape 12.

A titre de variante, l'étape 16 peut ne pas être présente et les étapes 18 et 20 peuvent être exécutées à chaque cycle. Lorsque la consigne C ne varie pas, les commandes sont néanmoins déterminées à l'étape 18 pour suivre la valeur inchangée de la consigne C et ces commandes sont transmises aux cellules à l'étape 20. En effet, dans certains cas, la consigne peut rester constante alors que la table de sélection change, dans ce cas, une permutation entre une cellule connectée et une cellule déconnectée peut avoir lieu pour améliorer l'équilibrage.

La figure 6 représente en partie haute un premier exemple de courbes d'évolution de la tension U (exprimée en volt), du courant I (exprimé en décaampère) et de la puissance instantanée P (exprimée en déciwatt) fournie par une batterie pour une période T ayant la structure représentée sur les figures 3 et 4 et comprenant au moins 98 cellules adaptées à fournir chacune 3,3 V. Si d'autres cellules sont disponibles dans le système, ces cellules ne seront pas utilisés (connectées), jusqu'à la définition d'une nouvelle table de sélection (à l'étape 14). La figure 6 montrant la distribution des courants moyens par numéro de mise en oeuvre ne représente que les 98 premiers numéros de mise en oeuvre. Si le système dispose de plus de 98 cellules alors les numéros de mise en oeuvre suivants ont un courant moyen nul car pas utilisé sur la fenêtre d'analyse considérée ici.

Dans le premier exemple, la tension U est sinusoïdale et le courant I est déphasé de n/3 par rapport à la courbe de tension U et contient des harmoniques, notamment de rang 3. Afin de fournir la courbe de tension sinusoïdale U, la batterie connecte, en sortie, une cellule après l'autre, jusqu'à la valeur maximale de la tension, puis les cellules sont déconnectées jusqu'à atteindre une tension nulle. Dans le premier exemple, l'insertion ou le retrait d'une cellule représente un saut de tension de 3,3 V. Pour générer la tension négative, les cellules sont connectées à la sortie avec la polarité inversée. La forme de la courbe de courant I et son déphasage, par rapport à la tension U, induit une alternance de signe sur la puissance instantanée P avec une puissance moyenne positive.

La figure 6 représente en partie basse le courant moyen Imoy fourni pour chaque cellule de la batterie ordonnée de 1 à 98 selon le numéro de mise en oeuvre de la cellule, la cellule ayant le numéro de mise en oeuvre 1 étant la première à être connectée. Il est à noter que sur une fenêtre d'analyse, la table de priorité peut avoir changé, ainsi que la table de sélection. Ainsi, un même numéro de mise en oeuvre peut avoir été occupé par deux cellules différentes à deux instants différents de la fenêtre d'analyse. Le courant moyen à considérer correspond au numéro de mise en oeuvre et non à une cellule qui a pris temporairement ce numéro de mise en oeuvre. Dans le premier exemple, la distribution des courants moyens n'est pas monotone et la cellule qui échange le plus d'énergie est celle dont le numéro de mise en oeuvre est le 69 et qui est connectée uniquement quand la tension U à fournir est supérieure à 224,4 V. Cela signifie que lors de la mise en oeuvre du procédé décrit précédemment en relation avec la figure 5, à l'étape 14, on attribue à la cellule la plus prioritaire en décharge le numéro de mise en oeuvre 69 qui a le courant moyen de plus forte valeur et on attribue à la cellule la moins prioritaire en décharge le numéro de mise en oeuvre 98 qui a le courant moyen non nul de plus faible valeur dans le cas où seules 98 cellules sont à disposition. Si, par exemple, on a 99 cellules disponibles, la cellule la moins prioritaire en décharge ne sera pas utilisée et elle aura le numéro de mise en oeuvre 99 (avec 0 Ampères de courant moyen) ou un numéro quelconque au-delà de 98 si on a plus de 99 cellules.

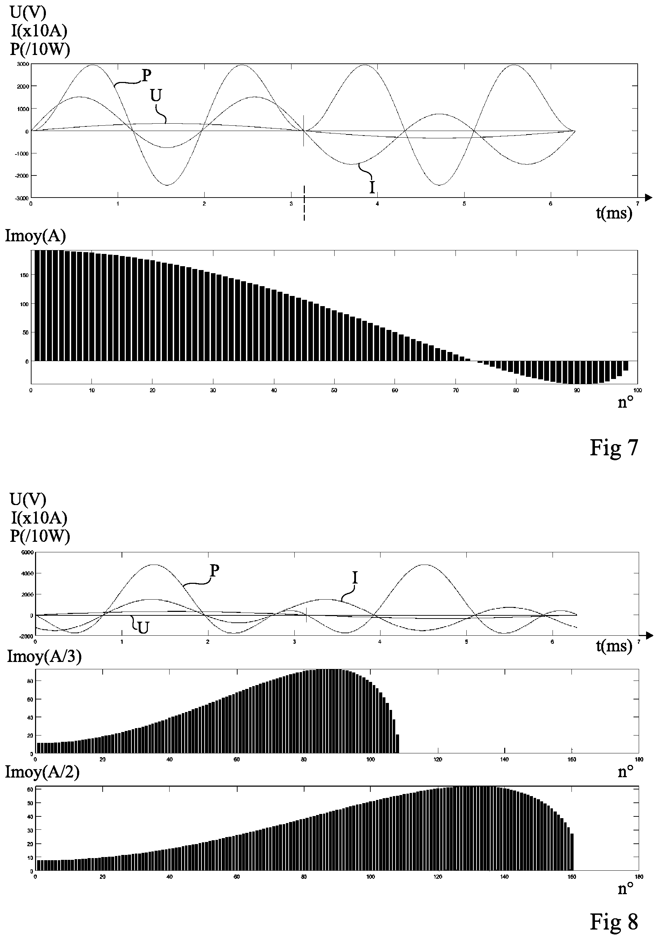

La figure 7 est une figure analogue à la figure 6 pour un deuxième exemple de courbes d'évolution de la tension U et du courant I. Dans le deuxième exemple, la tension U est sinusoïdale et le courant I est en phase avec la tension U et contient une forte composante harmonique, notamment de rang 3. En outre, la batterie comprend 98 cellules adaptées à fournir chacune 3,3 V. Comme cela apparaît en partie basse de la figure 7, pour les cellules dont le numéro de mise en oeuvre est inférieur ou égal au n°72, le courant moyen fourni par la cellule est positif et pour les cellules dont le numéro de mise en oeuvre est supérieur ou égal au n°74, le courant moyen fourni par la cellule est négatif. Ceci signifie que les cellules dont le numéro de mise en oeuvre est inférieur ou égal au n°72 subissent une décharge tandis que les cellules dont le numéro de mise en oeuvre est supérieur ou égal au n°74 subissent une charge. Dans le deuxième exemple, la batterie est globalement en décharge, donc les premiers 73 numéros de mise en oeuvre sont classés par ordre décroissant de courant moyen Imoy et associés aux 73 cellules les plus prioritaires à la décharge par ordre décroissant de niveaux de priorités. Selon un mode de réalisation, les derniers 26 numéros de mise en oeuvre peuvent être classés par ordre décroissant de courant moyen Imoy et associés aux 26 cellules les moins prioritaire à la décharge par ordre décroissant de niveaux de priorités. A titre de variante, les derniers 26 numéros de mise en oeuvre peuvent être classés par ordre croissant de courant moyen Imoy et associés aux 26 cellules les plus prioritaires à la charge par ordre décroissant de niveaux de priorités.

La figure 8 est une figure analogue à la figure 6 pour un troisième exemple de courbes d'évolution de la tension U et du courant I. Dans le troisième exemple, la tension U est sinusoïdale et le courant I est déphasé par rapport à la tension de n/4 et contient une forte composante harmonique, notamment de rang 3. La figure 8 représente en partie centrale et en partie basse le courant moyen Imoy fourni pour chaque cellule de la batterie ordonnée selon le numéro de mise en oeuvre de la cellule, la cellule de numéro 1 étant la première à être connectée, lorsque la tension nominale aux bornes de chaque cellule est égale à 3 V (histogramme en partie centrale) et lorsque la tension nominale aux bornes de chaque cellule est égale à 2 V (histogramme en partie basse).

Comme cela apparaît sur la figure 8, le nombre total de cellule mises en oeuvre pour suivre la consigne de tension U est plus élevé si les cellules sont chargées à 2 V plutôt qu'à 3 V.

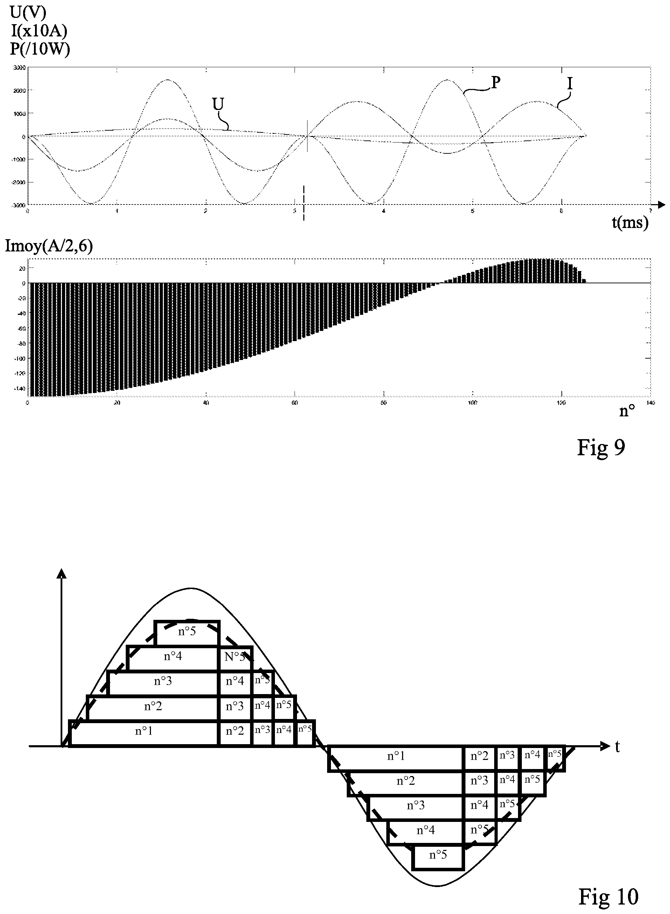

La figure 9 est une figure analogue à la figure 6 pour un quatrième exemple de courbes d'évolution de la tension U et du courant I. Dans le quatrième exemple, la tension U est sinusoïdale et le courant I est en phase avec la tension et contient une forte composante harmonique, notamment de rang 3. En outre, la batterie comprend au moins 125 cellules adaptées à fournir chacune 2,6 V. Dans le quatrième exemple, la batterie est globalement en charge, dans la mesure où l'énergie absorbée par les 92 premières cellules mises en oeuvre qui sont en moyenne en charge est supérieure à l'énergie délivrée par les 33 cellules suivantes qui sont en moyenne en décharge. Dans le quatrième exemple, la batterie étant globalement en charge, les premiers 92 numéros de mise en oeuvre sont classés par ordre de courants moyens croissants (en tenant compte du signe) et associés aux 92 cellules les plus prioritaires à la charge, et les derniers 33 numéros de mise en oeuvre peuvent être classés par ordre de courants moyens croissant et associés aux 33 cellules les moins prioritaire à la charge. A titre de variante, les derniers 33 numéros de mise en oeuvre peuvent être classés par ordre de courants moyens décroissant et associés aux 33 cellules les plus prioritaire à la décharge.

Si la batterie contient plus de 125 cellules, par exemple 160 cellules, les cellules allant de 126 à 160 ne seront pas utilisées dans cette période électrique et notamment jusqu'à la définition d'une nouvelle table de sélection (à l'étape 14) . La définition d'une nouvelle table de sélection, déclenchée par exemple par une nouvelle détermination de table de priorité, par exemple suite à la décharge non symétrique des cellules, à l'étape 10, peut changer la priorité des cellules, et une cellule qui n'a pas été utilisée sur la période précédente peut être utilisée par la suite, car elle peut être davantage prioritaire dans la nouvelle table de sélection.

La distribution réelle de courant par numéro de mise en oeuvre ne correspond généralement pas exactement à la distribution idéale de courant qu'il faudrait par cellule pour assurer un équilibrage parfait (notamment un courant proportionnel à la capacité restante en charge ou en décharge). En pratique, pour que chaque cellule finisse par voir un courant moyen relatif optimale, les cellules changent régulièrement de priorité et donc au final de numéro de mise en oeuvre pour converger sur une durée élevée, typiquement 10 à 100 fois supérieure à la fenêtre d'analyse, vers une valeur de courant moyen relatif proche de la valeur idéale. Typiquement, à moins d'une cellule défaillante, il n'y a aucune raison pour qu'une cellule non mise en oeuvre sur une période électrique ne le soit pas sur une autre période électrique.

Dans les modes de réalisation décrits précédemment, il a été utilisé la règle de déconnexion selon laquelle la première cellule à être connectée est la dernière cellule à être déconnectée, cette règle étant appelée règle FILO par la suite (sigle anglais pour First In Last Out). Toutefois, il peut être utilisé une autre règle de déconnexion. A titre d'exemple, il peut être utilisé la règle de connexion selon laquelle la première cellule à être connectée est la première cellule à être déconnectée, cette règle étant appelée règle FIFO par la suite (sigle anglais pour First In First Out).

La figure 10 est une figure analogue à la figure 1 dans le cas d'une utilisation de la règle de déconnexion FIFO. Les cellules étant déconnectées selon un ordre différent sur la figure 10 par rapport à la figure 1, elles voient donc un courant moyen différent, ce qui modifie la distribution des courants moyens en fonction des numéros de mise en oeuvre.

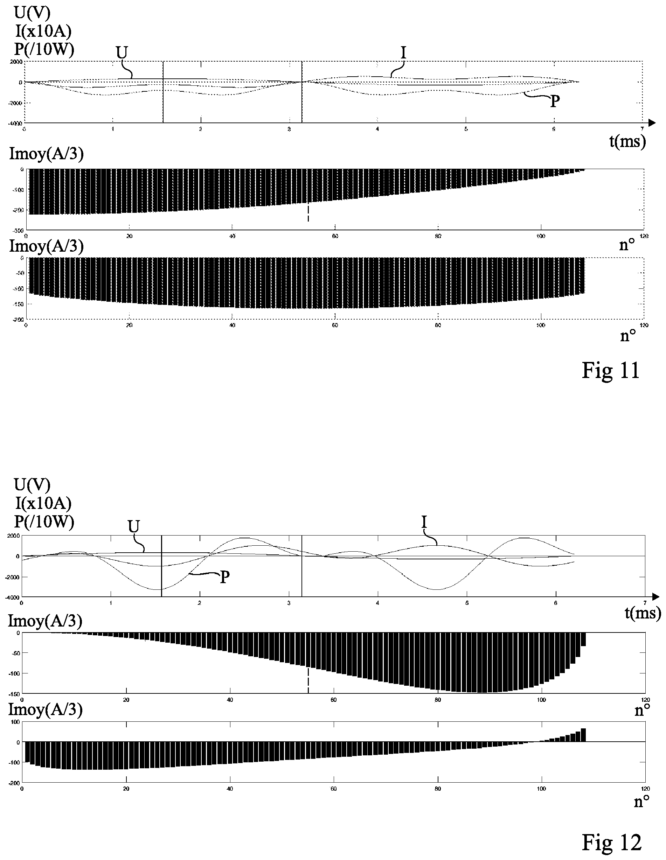

La figure 11 est une figure analogue à la figure 6 pour un cinquième exemple de courbes d'évolution de la tension U et du courant I. Dans le cinquième exemple, la tension U est sinusoïdale et le courant I est déphasé par rapport à la tension de $\pi$ et contient une forte composante harmonique, notamment de rang 3. En outre, la batterie comprend au moins 108 cellules adaptées à fournir chacune 3 V. La figure 11 représente en partie centrale et en partie basse le courant moyen Imoy fourni pour chaque cellule de la batterie ordonnée de 1 à 108 selon le numéro de mise en oeuvre de la cellule, la cellule de numéro 1 étant la première à être connectée, lorsque la règle de connexion FILO est mise en oeuvre (histogramme en partie centrale) et lorsque la règle de connexion FIFO est mise en oeuvre (histogramme en partie basse).

Selon un mode de réalisation, lors de la mise en oeuvre du procédé décrit précédemment en relation avec la figure 5, à l'étape 12, il est déterminé la distribution des courants moyen lorsqu'une première règle de déconnexion est utilisée, par exemple la règle FILO et un premier classement des numéros de mise en oeuvre est réalisé. Il est en outre déterminé la distribution des courants moyen lorsqu'une deuxième règle de déconnexion est utilisée, par exemple la règle FIFO et un deuxième classement des numéros de mise en oeuvre est réalisé. A l'étape 14, il est alors utilisé un critère de comparaison pour sélectionner le premier classement ou le deuxième classement qui sera utilisé pour déterminer la table de sélection. A titre d'exemple, il peut être estimé les courants idéaux par cellule permettant de parvenir ou de maintenir les cellules équilibrées et les cellules peuvent être triées selon ce critère, par exemple en valeur décroissante des courants idéaux, pour obtenir un troisième classement. Le troisième classement peut alors être comparé au premier classement et au deuxième classement et le classement sélectionné parmi le premier classement ou le deuxième classement peut être celui qui est le plus "proche" du troisième classement. A titre d'exemple, les valeurs de courant des premier, deuxième et troisième classements peuvent être normalisées, par exemple pour que la valeur moyenne du courant de chaque classement soit égale à l'unité. Pour chaque position, la valeur de courant idéal, éventuellement normalisée, peut être comparée aux valeurs de courant, éventuellement normalisées, du premier classement et du deuxième classement. Le classement sélectionné parmi le premier classement ou le deuxième classement peut être celui pour lequel les écarts entre les valeurs de courant idéal et les valeurs de courant du premier ou deuxième classement sont les plus faibles, tout en permettant de parvenir à l'équilibrage des cellules ou à défaut de s'en rapprocher le plus possible.

La figure 12 est une figure analogue à la figure 11 pour un sixième exemple de courbes d'évolution de la tension U et du courant I. Dans le sixième exemple, la tension U est sinusoïdale et le courant I est déphasé de 2n/3 par rapport à la tension U et contient une forte composante harmonique, notamment de rang 3. En outre, la batterie comprend au moins 108 cellules adaptées à fournir chacune 3 V. La distribution des courants moyens Imoy lorsque la règle de déconnexion FILO est mise en oeuvre (histogramme en partie centrale) est très différente de la distribution des courants moyens Imoy lorsque la règle de déconnexion FIFO est mise en oeuvre (histogramme en partie basse) .

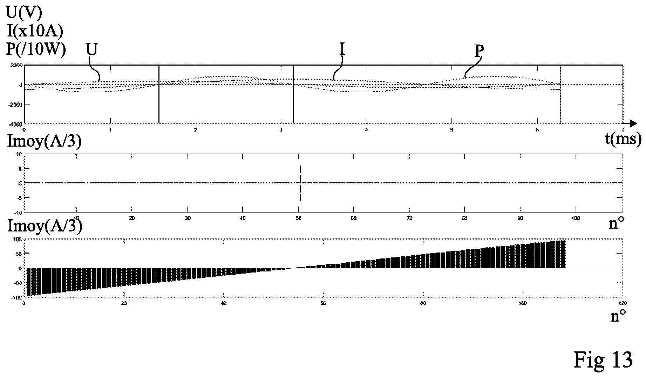

La figure 13 est une figure analogue à la figure 11 pour un septième exemple de courbes d'évolution de la tension U et du courant I. Dans le septième exemple, la tension U est sinusoïdale et le courant I est déphasé de n/2 par rapport à la tension. En outre, la batterie comprend au moins 108 cellules adaptées à fournir chacune 3 V. Lorsque la règle de déconnexion FILO est mise en oeuvre (histogramme en partie centrale), chaque cellule subit une petite charge et une petite décharge, à chaque période, de sorte que le courant moyen échangé par la cellule est nulle à la fin de chaque période. Lorsque la règle de connexion FIFO est mise en oeuvre (histogramme en partie basse), une moitié des cellules voit un courant moyen positif (de décharge) et l'autre moitié voit un courant moyen négatif (de charge).

Des modes de réalisation particuliers de la présente invention ont été décrits. Diverses variantes et modifications apparaîtront à l'homme de l'art. Bien que la figure 3 représente un mode de réalisation d'agencement des cellules et des interrupteurs d'un module $E_i$, il est clair que la structure de chaque module $E_i$ peut être différente. En particulier, la structure de chaque module $E_i$ peut correspondre à l'une des structures décrites dans les demandes de brevet WO 2012/117110, US2014287278, FR2972308, FR2972307 et US2014109950.

Il est à noter qu'une cellule peut être un assemblage de cellules élémentaires placées en série et/ou parallèle. S'il s'agit d'un assemblage de cellules élémentaires, un circuit de gestion annexe peut être utilisé par exemple pour mesurer des tensions/températures des cellules élémentaires ou encore pour assurer leur équilibrage. Cet assemblage de cellules élémentaires forme une cellule qui présente un certain état global, par exemple un état de charge, une température dont la valeur peut être déduite des états des cellules élémentaires constituant la cellule. L'invention a entre autre pour objet de gérer le courant moyen relatif traversant chaque cellule.

Il est à noter que dans les exemples décrits précédemment, il a surtout été présenté des cas d'équilibrage au vu des écarts de caractéristiques des cellules et des profils courant/tension à fournir en sortie. En pratique, des charges électriques secondaires peuvent être connectées à certaines cellules ou aux bornes de certains groupes de cellules. Dans ce cas, non seulement l'équilibrage selon l'invention a pour fonction de compenser les déséquilibres en capacité des cellules, mais aussi de compenser les déséquilibres induits par les différents courants de fuites liées aux charges secondaires. Typiquement, certaines cellules peuvent alimenter l'électronique de pilotage, l'électronique de mesure, d'autres peuvent alimenter le réseau de bord d'un véhicule par exemple, ou encore d'autres alimenter différents accessoires sous différentes tensions. Ces charges secondaires ne se préoccupent pas de maintenir les cellules équilibrées entre elles, les cellules doivent alors être équilibrés via le principe de l'invention lors de l'alimentation de la charge principale ou lors de la recharge.

Un cas particulier correspond à un dispositif composé de modules placés en série, chacun des modules permettant de commuter en série/parallèle des cellules, tel que décrit dans le brevet US20142872780. Chacun des modules permet par exemple de gérer 4 cellules, ces 4 cellules étant séparées en deux briques de 2 cellules, les deux briques pouvant être en série ou parallèle et les cellules à l'intérieur des deux briques pouvant elles-mêmes être placées en série/parallèle, chacune des cellules pouvant par ailleurs être totalement déconnectée. Soit I le courant principal en sortie du pack batterie, alors chaque cellule voit un courant sensiblement de I, I/2, I/3, I/4 ou nul selon qu'elles sont respectivement complètement en série, en parallèle par 2, parallèle par 3, en parallèle par 4 ou déconnectées. Pour passer d'une tension nulle à une tension élevée, les modules sont par exemple dans un premier temps by-passés (état 0), puis progressivement mis en oeuvre avec leur 4 cellules en parallèle (état 1), puis progressivement les modules présentent en parallèle 2 fois 2 cellules en série (état 2), puis deux cellules en série en série avec deux cellules en parallèle (état 3) et enfin les 4 cellules en série (état 4). Par numéro de mise en oeuvre, on peut par exemple considérer que le numéro 1 correspond à la cellule qui est toujours soumise en premier à un ratio du courant I plus élevé. C'est-à-dire :

- le premier module qui passe de l'état 0 à l'état 1 contient la cellule de mise en oeuvre numéro 1, le module m qui passe de l'état 0 à l'état 1 contient la cellule de mise en oeuvre ayant le numéro de mise en oeuvre le plus faible parmi les modules qui ne sont pas encore passés de l'état 0 à l'état 1.
- Ensuite le premier module qui passe de l'état 1 à l'état 2 est celui qui contient la cellule de mise en oeuvre numéro 1. Le module m qui passe de l'état 1 à l'état 2 contient la cellule de mise en oeuvre ayant le numéro de mise en oeuvre le plus faible parmi les modules qui ne sont pas encore passés de l'état 1 à l'état 2.
- Ensuite la première brique à l'intérieur des modules qui présente ses deux cellules en série et en série avec l'autre brique du module est celle qui contient la cellule de mise en oeuvre numéro 1. La brique b qui met ses deux cellules en série et en série avec l'autre brique contient la cellule de mise en oeuvre ayant le numéro de mise en oeuvre le plus faible parmi les briques qui n'ont pas encore fait le changement. A noter que les briques qui n'ont pas fait le changement présentent soit leurs 2 cellules en parallèle, soit éventuellement leurs 2 cellules en série si l'autre brique du module n'a pas encore changée et est placée en parallèle avec elle aussi ses cellules en série.

Ceci correspond à un fonctionnement nominal. Si jamais une cellule est défaillante, cette dernière devra toujours être écartée du fonctionnement et la/les cellules voisines ne pourront être placées en parallèle avec elle, ce qui modifiera nécessairement le fonctionnement par rapport à ce cas nominal. Par ailleurs, pour renforcer l'équilibrage, les cellules les moins prioritaires peuvent être complètement écartées du fonctionnement jusqu'à ce qu'elles soient strictement utiles à la fourniture de la tension, ou plutôt mises en oeuvre selon l'invention comme dans le cas déjà explicité du dispositif décrit en relation avec les figures 3 et 4.

## Revendications

1. Procédé de commande d'un système électrique (5) comprenant des première et deuxième bornes (P, N), des cellules électriques ($C_1$, $C_2$, $C_3$, $C_4$), correspondant chacune à un élément de stockage de charges électriques, et des interrupteurs ($SW_{1,1}$, $SW_{2,1}$, $SW_3$) configurés pour connecter ou déconnecter les cellules en série et/ou en parallèle entre les première et deuxième bornes (P, N), le procédé comprenant les étapes suivantes, pour la fourniture d'une tension entre les première et deuxième bornes (P, N), ou la fourniture d'un courant à la première borne, ou la connexion d'un nombre de cellules électriques, de façon à suivre une consigne :

   a) détermination d'une première table de priorités comprenant des premiers niveaux de priorité des cellules pour une opération de charge du système et d'une deuxième table de priorités comprenant des deuxièmes niveaux de priorité des cellules pour une opération de décharge du système, les premiers niveaux de priorité et les deuxièmes niveaux de priorité étant déterminés, pour chaque cellule, en prenant en compte au moins un critère parmi les critères choisis dans le groupe comprenant l'état de charge de la cellule, la température de la cellule, la capacité de la cellule, l'état de santé de la cellule, l'impédance interne de la cellule, le courant qui traverse système, le type de cellule, et un niveau d'urgence ;
   b) détermination d'une séquence de connexion des cellules pour suivre la consigne, les cellules étant ordonnées dans la séquence de connexion selon des numéros de mise en oeuvre des cellules dans la séquence de connexion, et détermination d'une donnée représentative du courant moyen (Imoy) ou de la puissance électrique moyenne échangé par chaque cellule sur une fenêtre temporelle en fonction du numéro de mise en oeuvre de la cellule dans la séquence de connexion des cellules ;
   c) détermination d'un classement d'au moins une partie des numéros de mise en oeuvre des cellules, le classement étant réalisé par ordre croissant ou décroissant des données représentatives du courant moyen ou de la puissance électrique moyenne ;
   d) attribution de rangs aux cellules selon l'ordre du classement, l'attribution étant réalisée par ordre croissant ou décroissant des niveaux de priorité d'au moins l'une des première ou deuxième tables de priorités ; et
   e) commande des interrupteurs (SW) pour connecter ou déconnecter les cellules selon l'ordre des rangs attribués.

2. Procédé de commande selon la revendication 1, comprenant, en outre, à l'étape e), la réception par le système (5) d'une nouvelle consigne (C) et la commande des interrupteurs pour connecter les cellules ($C_1$, $C_2$, $C_3$, $C_4$) selon l'ordre des rangs attribués.

3. Procédé de commande selon la revendication 1 ou 2, dans lequel à l'étape c), toutes les cellules sont classées par ordre croissant ou décroissant des données et dans lequel, à l'étape d), tous les rangs sont attribués aux cellules ($C_1$, $C_2$, $C_3$, $C_4$) par ordre croissant ou décroissant des niveaux de priorité de l'une des première ou deuxième tables de priorités.

4. Procédé de commande selon la revendication 1 ou 2, dans lequel les données peuvent être d'un premier signe ou d'un deuxième signe opposé au premier signe, le procédé comprenant, à l'étape c), la détermination d'un premier classement des cellules par ordre croissant ou décroissant des données du premier signe et la détermination d'un deuxième classement des cellules par ordre croissant ou décroissant des données du deuxième signe, le procédé comprenant en outre, à l'étape d), l'attribution des rangs selon l'ordre du premier classement aux cellules par ordre croissant ou décroissant des niveaux de priorité de la première table de priorités et l'attribution des rangs selon l'ordre du deuxième classement aux cellules par ordre croissant ou décroissant des niveaux de priorité de la deuxième table de priorités.

5. Procédé de commande selon l'une quelconque des revendications 1 à 4, dans lequel les cellules sont déconnectées selon l'une d'au moins deux règles de déconnexion, dans lequel les étapes b) et c) sont réalisées pour chaque règle de déconnexion, le procédé comprenant, pour la mise en oeuvre de l'étape d), la sélection d'un premier classement obtenu avec la première règle de déconnexion ou d'un deuxième classement obtenu avec la deuxième règle de déconnexion en fonction de la comparaison des données des premier et deuxième classements avec des données souhaitées.

6. Procédé de commande selon la revendication 5, dans lequel la première règle de déconnexion est que la première cellule ($C_1$, $C_2$, $C_3$, $C_4$) qui est connectée est la dernière cellule qui est déconnectée et dans lequel la deuxième règle de déconnexion est que la première cellule qui est connectée est la première cellule qui est déconnectée.

7. Procédé de commande selon l'une quelconque des revendications 1 à 4, dans lequel la fenêtre temporelle est inférieure à 500 ms.

8. Procédé de commande selon l'une quelconque des revendications 1 à 7, dans lequel la première table de priorités est utilisée lors de l'absorption par le système d'énergie électrique provenant de l'extérieur et dans lequel la deuxième table de priorités est utilisée lors de la fourniture d'énergie électrique par le système vers l'extérieur.

9. Procédé de commande selon la revendication 8, comprenant le passage de l'utilisation de la première table de priorités à la deuxième table de priorités lorsque le système passe de l'absorption d'énergie électrique provenant de l'extérieur à la fourniture d'énergie électrique vers l'extérieur et le passage de l'utilisation de la deuxième table de priorités à la première table de priorités lorsque le système passe de la fourniture d'énergie électrique vers l'extérieur à l'absorption d'énergie électrique provenant de l'extérieur.

10. Système électrique (5) comprenant des première et deuxième bornes (P, N), des cellules électriques ($C_1$, $C_2$, $C_3$, $C_4$), correspondant chacune à un élément de stockage de charges électriques, des interrupteurs ($SW_{1,1}$, $SW_{2,1}$, $SW_3$) configurés pour connecter ou déconnecter les cellules en série et/ou en parallèle entre les première et deuxième bornes (P, N) et un module de traitement (BMS) configuré, pour la fourniture d'une tension entre les première et deuxième bornes (P, N), ou la fourniture d'un courant à la première borne, ou la connexion d'un nombre de cellules électriques, de façon à suivre une consigne, pour :

a) déterminer une première table de priorités comprenant des premiers niveaux de priorité des cellules pour une opération de charge du système et d'une deuxième table de priorités comprenant des deuxièmes niveaux de priorité des cellules pour une opération de décharge du système, les premiers niveaux de priorité et les deuxièmes niveaux de priorité étant déterminés, pour chaque cellule, en prenant en compte au moins un critère parmi les critères choisis dans le groupe comprenant l'état de charge de la cellule, la température de la cellule, la capacité de la cellule, l'état de santé de la cellule, l'impédance interne de la cellule, le courant qui traverse système, le type de cellule, et un niveau d'urgence ;
b) déterminer une séquence de connexion des cellules pour suivre la consigne, les cellules étant ordonnées dans la séquence de connexion selon des numéros de mise en oeuvre des cellules dans la séquence de connexion, et déterminer une donnée représentative du courant moyen (Imoy) ou de la puissance électrique moyenne échangé par chaque cellule sur une fenêtre temporelle en fonction du numéro de mise en oeuvre de la cellule dans la séquence de connexion des cellules ;

c) classer au moins une partie des numéros de mise en oeuvre des cellules par ordre croissant ou décroissant des données représentatives du courant moyen ou de la puissance électrique moyenne ;

d) attribuer des rangs aux cellules selon l'ordre du classement par ordre croissant ou décroissant des niveaux de priorité d'au moins l'une des tables de priorités ; et

e) commander les interrupteurs (SW) pour connecter ou déconnecter les cellules selon l'ordre des rangs attribués.

11. Système électrique selon la revendication 10, dans lequel les cellules ($C_1$, $C_2$, $C_3$, $C_4$) sont des accumulateurs électriques.

**Patentansprüche**

1. Ein Verfahren zum Steuern eines elektrischen Systems (5), aufweisend erste und zweite Anschlüsse (P, N), elektrische Zellen ($C_1$, $C_2$, $C_3$, $C_4$), die jeweils einem elektrischen Ladungsspeicherelement entsprechen, und Schalter ($SW_{1,1}$, $SW_{2,1}$, $SW_3$), konfiguriert zum Verbinden oder Trennen der Zellen in Reihe und/oder parallel zwischen den ersten und zweiten Anschlüssen (P, N), wobei das Verfahren die folgenden Schritte aufweist für die Lieferung einer Spannung zwischen dem ersten und dem zweiten Anschluss (P, N), oder die Lieferung eines Stroms an den ersten Anschluss, oder die Verbindung einer Anzahl von elektrischen Zellen, um einem Sollwert zu folgen:

a) Bestimmen einer ersten Prioritätstabelle aufweisend erste Zellenprioritätsniveaus für einen Systemladevorgang und einer zweiten Prioritätstabelle aufweisend zweite Zellenprioritätsniveaus für einen Systementladevorgang, wobei die ersten Prioritätsniveaus und die zweiten Prioritätsniveaus für jede Zelle bestimmt werden unter Berücksichtigung wenigstens eines Kriteriums unter den Kriterien, die aus der folgenden Gruppe ausgewählt werden: der Ladezustand der Zelle, die Zellentemperatur, die Zellenkapazität, der Gesundheitszustand der Zelle, die interne Impedanz der Zelle, der das System durchfließende Strom, der Zellentyp und ein Notfallniveau;

b) Bestimmen einer Verbindungssequenz der Zellen, um dem Sollwert zu folgen, wobei die Zellen in der Verbindungssequenz gemäß Implementierungsnummern der Zellen in der Verbindungssequenz geordnet sind, und Bestimmen von Daten, die repräsentativ sind für den durchschnittlichen Strom (Imoy) oder für die durchschnittliche elektrische Leistung, die von jeder Zelle über ein Zeitfenster ausgetauscht wird, gemäß der Implementierungsnummer der Zelle in der Zellenverbindungssequenz;

c) Bestimmen einer Klassifizierung wenigstens eines Teils der Implementierungsnummern der Zellen, wobei die Klassifizierung durchgeführt wird durch Erhöhen oder Verringern einer Reihenfolge der Daten, die für den durchschnittlichen Strom oder für die durchschnittliche elektrische Leistung repräsentativ sind;

d) Zuweisen der Ränge zu den Zellen gemäß der Klassifizierung, wobei das Zuweisen durch Erhöhen oder Verringern der Reihenfolge der Prioritätsniveaus von wenigstens einer der ersten oder zweiten Prioritätstabellen ausgeführt wird; und

e) Steuern der Schalter (SW) zum Verbinden oder Trennen der Zellen gemäß der Reihenfolge der zugewiesenen Ränge.

2. Das Verfahren zum Steuern nach Anspruch 1, ferner aufweisend bei Schritt e) den Empfang durch das System (5) eines neuen Sollwerts (C) und das Steuern der Schalter zum Verbinden der Zellen ($C_1$, $C_2$, $C_3$, $C_4$) gemäß der Reihenfolge der zugewiesenen Ränge.

3. Das Verfahren zum Steuern nach Anspruch 1 oder 2, wobei in Schritt c) alle Zellen klassifiziert werden durch aufsteigende oder absteigende Reihenfolge der Daten und wobei in Schritt d) alle Ränge zu den Zellen ($C_1$, $C_2$, $C_3$, $C_4$) zugewiesen werden durch aufsteigende oder absteigende Reihenfolge der Prioritätsniveaus von einer der ersten oder zweiten Prioritätstabellen.

4. Das Verfahren zum Steuern nach Anspruch 1 oder 2, wobei die Daten ein erstes Vorzeichen oder ein zweites, dem ersten Vorzeichen entgegengesetztes Vorzeichen haben können, das Verfahren aufweisend, bei Schritt c), Bestimmen einer ersten Klassifizierung der Zellen durch Erhöhen oder Verringern der Reihenfolge der Daten mit dem ersten Vorzeichen und Bestimmen einer zweiten Klassifizierung der Zellen durch Erhöhen oder Verringern der Reihenfolge der Daten mit dem zweiten Vorzeichen, das Verfahren ferner aufweisend, bei Schritt d), Zuweisen der Ränge gemäß der Reihenfolge der ersten Klassifizierung zu den Zellen durch Erhöhen oder Verringern der Reihenfolge der Prioritätsniveaus der ersten Prioritätstabelle und Zuweisen der Ränge gemäß der Reihenfolge der zweiten Klassifizierung zu den Zellen durch Erhöhen oder Verringern der Reihenfolge der Prioritätsniveaus der zweiten Prioritätstabelle.

5. Das Verfahren zum Steuern nach einem der Ansprüche 1 bis 4, wobei die Zellen nach einer von wenigstens zwei Trennregeln getrennt werden, wobei die Schritte b) und c) für jede Trennregel ausgeführt werden, das Verfahren aufweisend, für die Durchführung von Schritt d), Auswählen einer ersten Klassifizierung, die mit der ersten Trennregel erhalten wurde, oder einer zweiten Klassifizierung, die mit der zweiten Trennregel erhalten wurde, gemäß dem Vergleich der Daten der ersten und zweiten Klassifizierung mit gewünschten Daten.

6. Das Verfahren zum Steuern nach Anspruch 5, wobei die erste Trennregel darin besteht, dass die erste zu verbindende Zelle ($C_1$, $C_2$, $C_3$, $C_4$) die letzte zu trennende Zelle ist und wobei die zweite Trennregel darin besteht, dass die erste zu verbindende Zelle die erste zu trennende Zelle ist.

7. Das Verfahren zum Steuern nach einem der Ansprüche 1 bis 4, wobei das Zeitfenster kürzer als 500 ms ist.

8. Das Verfahren zum Steuern nach einem der Ansprüche 1 bis 7, wobei die erste Prioritätstabelle verwendet wird, während der Aufnahme, durch das System, von elektrischer Energie, die von außen kommt, und wobei die zweite Prioritätstabelle verwendet wird, während der Abgabe von elektrischer Energie durch das System nach außen.

9. Das Verfahren zum Steuern nach Anspruch 8, aufweisend Übergehen von der Verwendung der ersten Prioritätstabelle zur zweiten Prioritätstabelle, wenn das System übergeht von der Aufnahme von elektrischer Energie von außen zur Abgabe von elektrischer Energie nach außen und Übergehen von der Verwendung der zweiten Prioritätstabelle zur ersten Prioritätstabelle, wenn das System übergeht von der Abgabe von elektrischer Energie nach außen zur Aufnahme von elektrischer Energie von außen.

10. Ein elektrisches System (5), aufweisend erste und zweite Anschlüsse (P, N), elektrische Zellen ($C_1$, $C_2$, $C_3$, $C_4$), die jeweils einem elektrischen Ladungsspeicherelement entsprechen, Schalter ($SW_{1,1}$, $SW_{2,1}$, $SW_3$), konfiguriert zum Verbinden oder Trennen der Zellen in Reihe und/oder parallel zwischen den ersten und zweiten Anschlüssen (P, N), und ein Verarbeitungsmodul (BMS), konfiguriert zur Lieferung einer Spannung zwischen dem ersten und dem zweiten Anschluss (P, N) oder zur Lieferung eines Stroms an den ersten Anschluss oder zur Verbindung einer Anzahl von elektrischen Zellen, um einem Sollwert zu folgen:

   a) Bestimmen einer ersten Prioritätstabelle aufweisend erste Zellenprioritätsniveaus für einen Systemladevorgang und einer zweiten Prioritätstabelle aufweisend zweite Zellenprioritätsniveaus für einen Systementladevorgang, wobei die ersten Prioritätsniveaus und die zweiten Prioritätsniveaus für jede Zelle bestimmt werden unter Berücksichtigung wenigstens eines Kriteriums unter den Kriterien, die aus der folgenden Gruppe ausgewählt werden: der Ladezustand der Zelle, die Zellentemperatur, die Zellenkapazität, der Gesundheitszustand der Zelle, die interne Impedanz der Zelle, der das System durchfließende Strom, der Zellentyp und ein Notfallniveau;
   b) Bestimmen einer Verbindungssequenz der Zellen, um dem Sollwert zu folgen, wobei die Zellen in der Verbindungssequenz gemäß Implementierungsnummern der Zellen in der Verbindungssequenz geordnet sind, und Bestimmen von Daten, die repräsentativ sind für den durchschnittlichen Strom (Imoy) oder für die durchschnittliche elektrische Leistung, die von jeder Zelle über ein Zeitfenster ausgetauscht wird, gemäß der Implementierungsnummer der Zelle in der Zellenverbindungssequenz;
   c) Klassifizieren wenigstens eines Teils der Implementierungsnummern der Zellen durch Erhöhen oder Verringern einer Reihenfolge der Daten, die für den durchschnittlichen Strom oder für die durchschnittliche elektrische Leistung repräsentativ sind;
   d) Zuweisen von Rängen zu den Zellen gemäß der Klassifizierungsreihenfolge, durch Erhöhen oder Verringern der Reihenfolge der Prioritätsniveaus von wenigstens einer der Prioritätstabellen; und
   e) Steuern der Schalter (SW) zum Verbinden oder Trennen der Zellen gemäß der Reihenfolge der zugewiesenen Ränge.

11. Das elektrische System nach Anspruch 10, wobei die Zellen ($C_1$, $C_2$, $C_3$, $C_4$) elektrische Akkumulatoren sind.

## Claims

1. A method of controlling an electric system (5) comprising first and second terminals (P, N), electric cells ($C_1$, $C_2$, $C_3$,

$C_4$), each corresponding to an electrical charge storage element, and switches ($SW_{1,1}$, $SW_{2,1}$, $SW_3$) configured to connect or disconnect the cells in series and/or in parallel between the first and second terminals (P, N), the method comprising the steps of, for the delivery of a voltage between the first and second terminals (P, N), or the delivery of a current to the first terminal, or the connection of a number of electric cells, in order to follow a set point:

a) determining a first priority table comprising first cell priority levels for a system charge operation and a second priority table comprising second cell priority levels for a system discharge operation, the first priority levels and the second priority levels being determined, for each cell, taking into account at least one criterium among the criteria selected in the group comprising the state of charge of the cell, the cell temperature, the cell capacity, the state of health of the cell, the intern impedance of the cell, the current crossing the system, the type of cell, and an emergency level;

b) determining a connection sequence of the cells to follow the set point, the cells being ordered in the connection sequence according to implementation numbers of the cells in the connection sequence, and determining data representative of the average current (Imoy) or of the average electric power exchanged by each cell over a time window according to the implementation number of the cell in the cell connection sequence;

c) determining a classification of at least part of the implementation numbers of the cells, the classification being performed by increasing or decreasing order of the data representative of the average current or of the average electric power;

d) assigning the ranks to the cells according to the classification, the assigning being performed order by increasing or decreasing order of the priority levels of at least one of the first or second priority tables; and

e) controlling the switches (SW) to connect or disconnect the cells according to the order of the assigned ranks.

2. The control method according to claim 1, further comprising, at step e), the reception by the system (5) of a new set point (C) and the control of the switches to connect the cells ($C_1$, $C_2$, $C_3$, $C_4$) according to the order of the assigned ranks.

3. The control method according to claim 1 or 2, wherein at step c), all the cells are classified by increasing or decreasing order of the data and wherein, at step d), all the ranks are assigned to the cells ($C_1$, $C_2$, $C_3$, $C_4$) by increasing or decreasing order of the priority levels of one of the first or second priority tables.

4. The control method of claim 1 or 2, wherein the data may have a first sign or a second sign opposite to the first sign, the method comprising, at step c), determining a first classification of the cells by increasing or decreasing order of the data of the first sign and determining a second classification of the cells by increasing or decreasing order of the data of the second sign, the method further comprising, at step d), assigning the ranks according to the order of the first classification to the cells by increasing or decreasing order of the priority levels of the first priority table and assigning the ranks according to the order of the second classification to the cells by increasing or decreasing order of the priority levels of the second priority table.

5. The control method according to any of claims 1 to 4, wherein the cells are disconnected according to one of at least two disconnection rules, wherein steps b) and c) are carried out for each disconnection rule, the method comprising, for the implementation of step d), selecting a first classification obtained with the first disconnection rule or a second classification obtained with the second disconnection rule according to the comparison of the data of the first and second classifications with desired data.

6. The control method according to claim 5, wherein the first disconnection rule is that the first cell ($C_1$, $C_2$, $C_3$, $C_4$) to be connected is the last cell to be disconnected and wherein the second disconnection rule is that the first cell to be connected is the first cell to be disconnected.

7. The control method according to any of claims 1 to 4, wherein the time window is shorter than 500 ms.

8. The control method according to any of claims 1 to 7, wherein the first priority table is used during the absorption by the system of electric energy originating from the outside and wherein the second priority table is used during the delivery of electric energy by the system to the outside.

9. The control method according to claim 8, comprising passing from the use of the first priority table to the second priority table when the system passes from the absorption of electric energy originating from the outside to the delivery of electric energy to the outside and passing from the use of the second priority table to the first priority table when the system passes from the delivery of electric energy to the outside to the absorption of electric energy originating from the outside.

10. An electric system (5) comprising first and second terminals (P, N), electric cells ($C_1$, $C_2$, $C_3$, $C_4$), each corresponding to an electrical charge storage element, switches ($SW_{1,1}$, $SW_{2,1}$, $SW_3$) configured to connect or disconnect the cells in series and/or in parallel between the first and second terminals (P, N), and a processing module (BMS) configured to, for the delivery of a voltage between the first and second terminals (P, N), or the delivery of a current to the first terminal, or the connection of a number of electric cells, in order to follow a set point:

   a) determine a first priority table comprising first cell priority levels for a system charge operation and a second priority table comprising second cell priority levels for a system discharge operation, the first priority levels and the second priority levels being determined, for each cell, taking into account at least one criterium among the criteria selected in the group comprising the state of charge of the cell, the cell temperature, the cell capacity, the state of health of the cell, the intern impedance of the cell, the current crossing the system, the type of cell, and an emergency level;

   b) determine a connection sequence of the cells to follow the set point, the cells being ordered in the connection sequence according to implementation numbers of the cells in the connection sequence, and determine data representative of the average current (Imoy) or of the average electric power exchanged by each cell over a time window according to the implementation number of the cell in the cell connection sequence;

   c) classify at least part of the implementation numbers of the cells by increasing or decreasing order of the data representative of the average current or of the average electric power;

   d) assign ranks to the cells according to the classification order by increasing or decreasing order of the priority levels of at least one of the priority tables; and

   e) control the switches (SW) to connect or disconnect the cells according to the order of the assigned ranks.

11. The electric system according to claim 10, wherein the cells ($C_1$, $C_2$, $C_3$, $C_4$) are electric accumulators.

Fig 1

Fig 2

Fig 3

Fig 4

16 — Attente réception nouvelle consigne

10 — Détermination table de priorités

12 — Détermination courants moyens

Détermination table de sélection

18 — Détermination des commandes

14

20 — Envoi des commandes

**Fig 5**

U(V)
I(x10A)
P(/10W)

T

t(ms)

Imoy(A)

n°

**Fig 6**

U(V)
I(x10A)
P(/10W)

Fig 7

U(V)
I(x10A)
P(/10W)

Fig 8

U(V)
I(x10A)
P(/10W)

t(ms)

Imoy(A/2,6)

n°

Fig 9

Fig 10

Fig 11

Fig 12

U(V)
I(x10A)
P(/10W)

Imoy(A/3)

Imoy(A/3)

t(ms)

n°

n°

Fig 13

**Documents brevets cités dans la description**

- US 2014015488 A
- US 2014287278 A
- FR 2972308
- FR 2972307
- US 2014109950 A
- US 5656915 A
- WO 2012117110 A
- US 20142872780 A